# DEMANDE DE BREVET EUROPEEN

(11) **EP 1 505 703 A1**
(43) Date de publication de la demande: **09.02.2005**
(21) Numéro de dépôt: 04103332.5
(22) Date de dépôt: 13.07.2004
(51) Int. Cl.: H02G 3/06, H02G 3/08

(54) **Dispositif de protection pour boîtier de dérivation.**

(30) Priorité: 22.07.2003 FR 0308920
(71) Demandeur: Schneider Electric Industries SAS, 92500 Rueil-Malmaison (FR)
(72) Inventeur: BOUET, Emmanuel, 67200, SARRE UNION (FR); BUCHY, Bernard, 67320, SCHOENBOURG (FR); BUCHY, Stéphane, 67320, SCHOENBOURG (FR); WASNER, Olivier, 67340, INGWILLER (FR)

(57) **Abrégé**

L'invention concerne un dispositif de protection pour boîtier de dérivation comportant une première paroi (21) susceptible d'être fixée contre un boîtier de dérivation (10) et une seconde paroi (22) susceptible d'être traversée par une goulotte de distribution (40) acheminant des conducteurs électriques destinés à être insérés dans le boîtier de dérivation (10). La première paroi (21) comprend un système de fixation permettant de fixer le dispositif de protection (20) sur une face latérale (11a,11b) du boîtier de dérivation (10) munie indifféremment d'un ou de plusieurs orifices d'entrées (15a,15b) pour les conducteurs électriques. Le système de fixation comprend plusieurs clips de fixation élastiques (30,31,32,33).

## Description

La présente invention se rapporte à un dispositif destiné à être associé à un boîtier de dérivation dans une installation électrique. Ce dispositif a pour but de faire le raccord entre une face latérale d'un boîtier de dérivation comportant un ou plusieurs orifices d'entrées pour conducteurs électriques et une goulotte de distribution véhiculant des conducteurs électriques raccordés à l'intérieur du boîtier de dérivation, laquelle goulotte peut présenter une section de différentes formes.

L'utilisation d'un boîtier fermé pour effectuer une dérivation ou un raccordement de conducteurs électriques, ou pour loger tout type d'appareillage électrique, est bien connue et a notamment pour but d'assurer l'étanchéité des connexions à l'intérieur du boîtier et de protéger les personnes contre un accès direct à ces conducteurs électriques. Ce type de boîtier est généralement parallélépipédique avec des faces latérales pouvant comporter chacune soit un, soit plusieurs orifices d'entrées de conducteurs, par exemple des faces comprenant un ou deux orifices pour les petits boîtiers, un, deux ou trois voire plus pour les boîtiers de plus grande taille. Ces orifices sont habituellement de section circulaire avec des capuchons élastiques découpables qui permettent de faciliter l'introduction de façon étanche soit de câbles électriques directement, soit de tubes et de conduits de distribution cylindriques contenant des câbles électriques.

Il est fréquent que les conducteurs électriques provenant d'un tel boîtier soient ensuite placés dans des éléments de distribution tels que des moulures ou des goulottes de distribution. Or, une telle goulotte possède souvent une section transversale de forme rectangulaire, ce qui fait qu'elle n'est alors pas adaptée pour pouvoir s'introduire directement dans les orifices circulaires des boîtiers de dérivation. Cela entraîne donc la nécessité de conserver un espace ouvert entre l'extrémité de la goulotte de distribution et l'orifice d'entrée du boîtier de dérivation. Au niveau de cet espace, les conducteurs électriques ne sont alors plus cachés. Ils peuvent donc être en accès direct pour une personne, générant notamment des problèmes de sécurité électrique ainsi que des problèmes esthétiques de l'installation électrique.

C'est pourquoi l'invention a pour but de proposer un dispositif de protection permettant de faire le raccord entre d'une part le ou les orifices d'une face d'un boîtier de dérivation et d'autre part une moulure ou goulotte de distribution pouvant présenter diverses formes et dimensions, de façon à maintenir les conducteurs électriques cachés dans l'espace situé entre le boîtier et la goulotte. Ce dispositif doit être simple, économique et doit pouvoir s'adapter à différents types de boîtiers et différentes formes de goulottes.

Pour cela, l'invention décrit un dispositif de protection pour boîtier de dérivation comportant une première paroi susceptible d'être fixée contre un boîtier de dérivation et une seconde paroi opposée susceptible d'être traversée par une goulotte de distribution véhiculant des conducteurs électriques raccordés à l'intérieur du boîtier de dérivation. La première paroi comprend un système de fixation permettant de fixer le dispositif sur une face latérale du boîtier de dérivation munie indifféremment d'un ou de plusieurs orifices d'entrées pour les conducteurs électriques. Ainsi, un même dispositif peut être monté sur n'importe laquelle des faces latérales d'un boîtier comportant au moins un orifice d'entrées, ce qui simplifie son utilisation et sa mise en place dans une installation électrique par un opérateur.

Selon une caractéristique, le système de fixation comprend plusieurs clips de fixation élastiques venant en saillie de la première paroi du dispositif pour s'encliqueter sur un orifice d'entrée d'une paroi latérale du boîtier de dérivation. Chaque clip de fixation possède une rainure extérieure et une rainure intérieure, la rainure intérieure pouvant s'encliqueter dans le bord d'un des deux orifices centraux d'une face latérale du boîtier possédant un nombre pair d'orifices et la rainure extérieure pouvant s'encliqueter dans le bord de l'orifice central d'une face latérale du boîtier possédant un nombre impair d'orifices. Un même dispositif de protection peut donc être utilisé sur n'importe quelle face latérale d'un boîtier de dérivation ayant un diamètre d'orifice donné, ce qui simplifie le nombre de références différentes à mettre à disposition d'un utilisateur.

Selon une autre caractéristique, la seconde paroi du dispositif est munie d'un quadrillage réalisée en moindre épaisseur permettant une découpe selon une forme complémentaire à la section transversale de la goulotte de distribution. Ce quadrillage comporte par exemple une pluralité de formes rectangulaires avec des pas prédéterminés permettant de s'adapter facilement et rapidement à différentes dimensions des sections de goulottes.

Avantageusement, le dispositif de protection peut se fixer sur le boîtier de dérivation après l'introduction des conducteurs à l'intérieur du boîtier.

D'autres caractéristiques et avantages vont apparaître dans la description détaillée qui suit en se référant à un mode de réalisation donné à titre d'exemple et représenté par les dessins annexés sur lesquels :
- la figure 1 représente un boîtier de dérivation ainsi qu'un dispositif de protection permettant de faire le raccord entre le boîtier et une goulotte de distribution,
- la figure 2 montre un boîtier de dérivation seul,
- les figures 3 & 4 montrent deux vues différentes du dispositif de protection,
- la figure 5 détaille un exemple de clip de fixation du système de fixation,
- les figures 6 & 7 schématisent le positionnement d'un et de deux orifices d'entrées d'une face latérale de boîtier contre les clips d'un dispositif de protection.

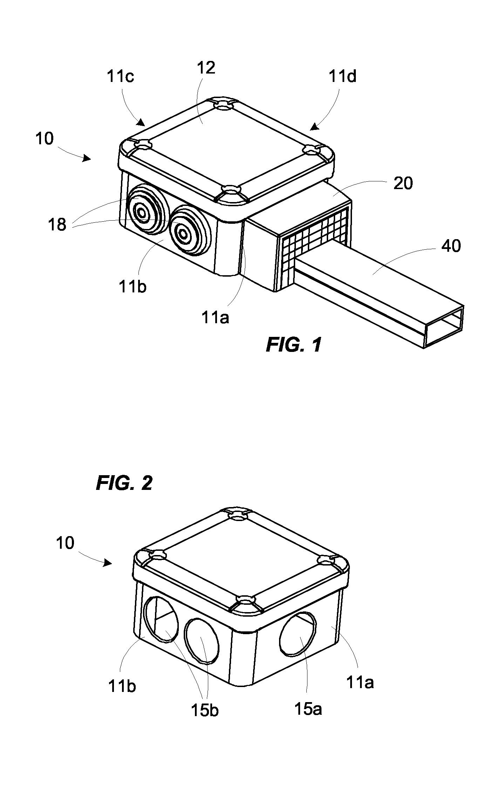

En référence à la figure 1, un boîtier de dérivation 10 comporte quatre faces latérales 11a, 11b, 11c, 11d, une face arrière 13 ainsi qu'un couvercle 12 qui peut par exemple être vissé ou encliqueté sur le boîtier 10. Un tel boîtier, réalisé dans un matériau isolant telle qu'une matière plastique, est couramment utilisé pour effectuer une dérivation ou un raccordement de conducteurs électriques, ou pour installer divers appareillages électriques à l'intérieur. Une fois installé, le boîtier 10 est généralement fixé par sa face arrière 13 contre un support mural quelconque. Une ou plusieurs faces latérales 11a, 11b, 11c, 11d comportent soit un, soit plusieurs orifices d'entrées 15a,15b pour permettre le passage des conducteurs électriques. Dans l'exemple représenté dans les figures, la face latérale 11b comporte deux orifices 15b et la face 11a comporte un seul orifice 15a (voir figure 2). Ces orifices 15a,15b sont généralement circulaires et sont munis de façon connue d'un capuchon 18 amovible et sectionnable suivant différents diamètres afin de permettre l'introduction des câbles/tubes dans le boîtier en gardant une bonne étanchéité.

Les orifices 15a,15b sont positionnés de façon sensiblement symétrique par rapport au centre de la face latérale. Ainsi, l'orifice 15a est placé au milieu de la face latérale 11 a alors que les deux orifices 15b sont placés de part et d'autre du centre de la face latérale 11 b. D'une façon générale, une face latérale qui comprend un nombre impair d'orifices (par exemple 2n+1) possède un orifice central 15a positionné comme l'orifice de la face 11a et n orifices de chaque côté de cet orifice central. De même, une face latérale qui comprend un nombre pair d'orifices (par exemple 2n+2) possède deux orifices centraux 15b positionnés comme les deux orifices de la face 11 b et n orifices de part et d'autre de ces deux orifices 15b.

Une goulotte de distribution 40 de section transversale carrée ou rectangulaire achemine des câbles ou fils conducteurs (non représentés sur les figures) vers ou en provenance d'une face latérale (en l'occurrence la face 11a dans la figure 1) du boîtier 10. Or, la forme carrée ou rectangulaire de la goulotte 40 ne permet pas de l'introduire facilement dans un orifice 15a,15b d'une face latérale. Il subsiste donc un espace entre l'extrémité de la goulotte 40 et le boîtier 10 au niveau duquel les câbles sont exposés. Pour remédier à cet inconvénient, l'invention propose un dispositif de protection 20.

Dans le mode de réalisation préféré, le dispositif de protection 20 présente une forme sensiblement parallélépipédique avec une paroi supérieure 28 et quatre parois latérales 21,22,23,24 mais ne présente pas de paroi de fond. Il peut être par exemple réalisé en matière plastique. Une première paroi latérale 21 est destinée à être fixée contre une des faces latérales (par exemple la face 11a dans la figure 1) du boîtier 10. Une seconde paroi latérale 22 est destinée à être traversée par la goulotte de distribution 40. La première paroi 21 et la seconde paroi 22 sont généralement opposées de façon à orienter la goulotte 40 perpendiculairement à la face 11a d'où sortent les conducteurs acheminés par la goulotte 40. Mais il serait également possible de concevoir une seconde paroi 22 attenante à la première paroi 21.

La première paroi 21 présente trois ouvertures 25 adjacentes l'une de l'autre et séparées l'une de l'autre par deux languettes 26 ainsi formées dans la paroi 21. Les ouvertures 25 sont agencées pour permettre l'introduction dans le boîtier 10 des conducteurs de la goulotte 40 indifféremment à travers une face 11a ou à travers une face 11 b. C'est pourquoi, une fois que le dispositif de protection 20 est fixé contre le boîtier 10, il y a toujours une ouverture 25 qui est située soit devant les deux orifices 15b d'une face latérale 11 b, soit devant l'orifice 15a d'une face latérale 11a.

Avantageusement, le dispositif de protection 20 ne comporte pas de paroi de fond et les ouvertures 25 communiquent avec le fond, ce qui permet d'installer le dispositif de protection 20 et de le fixer au boîtier 10 une fois que les conducteurs de la goulotte 40 sont déjà insérés et/ou raccordés à l'intérieur du boîtier 10. Ainsi, il peut très rapidement être placé au dernier moment de façon à ne pas gêner l'installation de la goulotte et des conducteurs.

La première paroi 21 du dispositif 20 comprend un système de fixation 30,31,32,33. Dans le mode de réalisation préféré, le système de fixation présente plusieurs clips de fixation élastiques 30,31,32,33 qui viennent en saillie de la première paroi 21. Ces clips sont préférentiellement au nombre de quatre et portés deux à deux par chaque languette 26 de la paroi 21. Ils sont disposés, une fois le dispositif 20 fixé contre le boîtier 10, de façon sensiblement symétrique par rapport au centre d'une face latérale (par exemple 11a ou 11b) du boîtier. On pourrait néanmoins envisager l'utilisation de deux ou trois clips seulement, moyennant une moindre efficacité de la fixation.

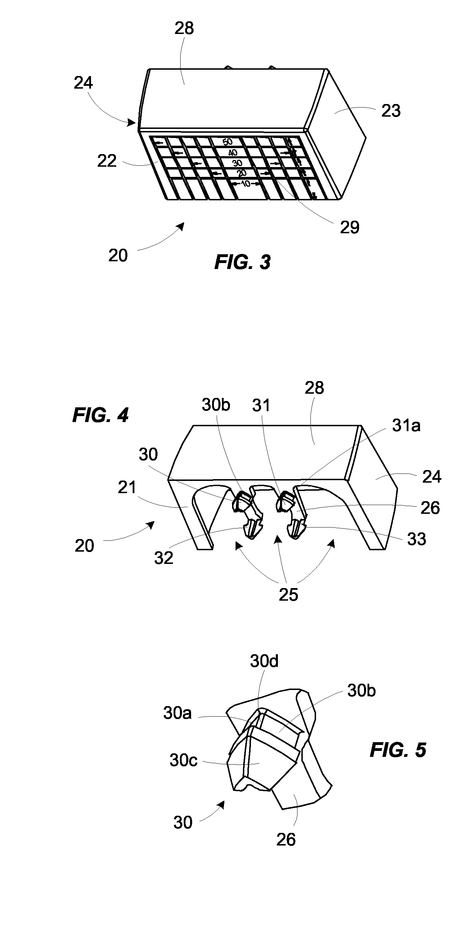

Comme détaillé dans le clip de fixation 30 de la figure 5, chacun des clips présente deux rainures 30a,30b de part et d'autre d'une arête centrale 30d. Une première rainure, appelée rainure intérieure 30b, est plus orientée vers le milieu de la paroi 21 qu'une seconde rainure, appelée rainure extérieure 30a, qui est plus orientée vers l'extérieur de la paroi 21. La largeur des rainures 30a,30b est au moins égale à l'épaisseur des faces latérales 11 a,11 b du boîtier 10 pour que les faces latérales puissent loger dans les rainures. Les rainures 30a,30b se prolongent par un rebord 30c vers l'extrémité du clip 30, permettant de pouvoir coincer une face latérale du boîtier 10 dans la rainure 30, entre la paroi 21 et le rebord 30c. Ce rebord présente de préférence un plan incliné ce qui, compte tenu de l'élasticité du clip 30, permet de faciliter l'introduction du dispositif de protection dans un orifice 15a,15b, une fois les capuchons 18 enlevés.

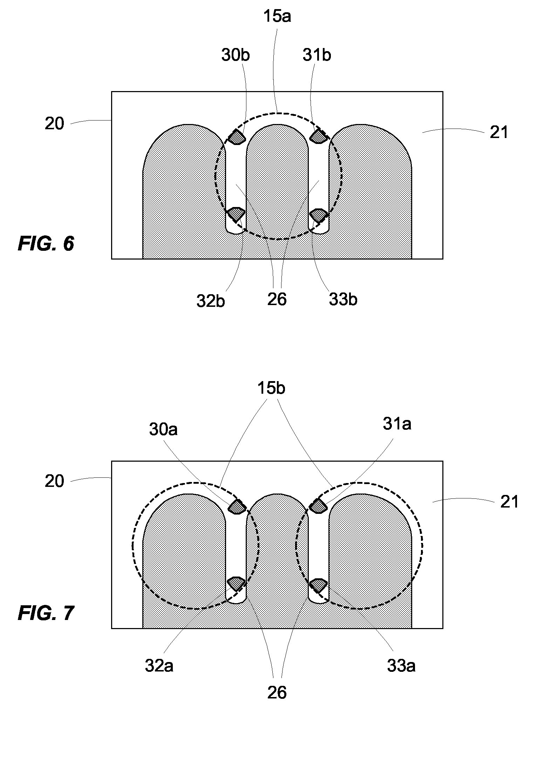

Les figures 6 & 7 montrent deux vues très schématiques en coupe de l'agencement d'un même dispositif de protection 20, doté de quatre clips de fixation 30,31,32,33, qui peut être introduit indifféremment soit dans un orifice 15a correspondant à une face latérale 11a (figure 6), soit dans deux orifices 15b correspondant à une face latérale 11 b (figure 7). Les orifices circulaires 15a et 15b sont de même dimension. Dans la figure 6, le pourtour de l'orifice central 15a est indiqué en pointillés. Les quatre clips sont introduits dans cet orifice 15a et leurs rainures extérieures 30a,31a,32a,33a sont chacune encliquetées dans le bord de l'orifice 15a, assurant ainsi la fixation du dispositif de protection contre une face latérale 11a.

Dans la figure 7, le pourtour des deux orifices centraux 15b sont également indiqués en pointillés. Deux clips 30,32 sont introduits dans un des deux orifices 15b et les deux autres clips 31,33 sont introduits dans l'autre orifice 15b. Les rainures intérieures 30b,32b sont encliquetées dans le bord du premier orifice 15b et les rainures intérieures 31 b,33b sont encliquetées dans le bord du second orifice 15b, assurant ainsi la fixation du dispositif de protection contre une face latérale 11 b.

La seconde paroi latérale 22 du dispositif de protection 20 est dotée d'un quadrillage 29. Le quadrillage 29 est préférentiellement matérialisé par une moindre épaisseur de la paroi 22 ce qui permet de faciliter un découpage de la paroi 22 selon ce quadrillage 29, à l'aide d'un outil adapté. Le quadrillage 29 permet ainsi de faire une découpe dans la paroi 22 selon une forme complémentaire à la section transversale de la goulotte de distribution 40 qui doit être insérée dans le dispositif 20. En référence à l'exemple de la figure 3, le quadrillage 29 propose ainsi plusieurs formes rectangulaires de dimensions différentes et superposées, de façon à pouvoir insérer facilement diverses tailles de goulottes 40 de section rectangulaire. Préférentiellement, les différentes dimensions du quadrillage 29 sont faites à des pas prédéterminés et la paroi latérale 22 comporte des indications ou repères donnant les dimensions du quadrillage afin de guider l'utilisateur dans sa découpe.

L'invention couvre de façon équivalente un dispositif de protection 20 adapté à des goulottes de distribution 40, de section transversale non rectangulaire. On peut envisager par exemple des goulottes de distribution de section circulaire mais dont le diamètre serait supérieur à celui des orifices 15a,15b, ce qui empêcherait de pouvoir les introduire dans le boîtier 10. Dans ce cas, le quadrillage 29 de la seconde paroi 22 proposerait par exemple des formes circulaires superposées.

Il est bien entendu que l'on peut, sans sortir du cadre de l'invention, imaginer d'autres variantes et perfectionnements de détail et de même envisager l'emploi de moyens équivalents.

## Revendications

1. Dispositif de protection (20) pour boîtier de dérivation, comportant une première paroi (21) qui est susceptible d'être fixée contre un boîtier de dérivation (10) et une seconde paroi (22) qui est susceptible d'être traversée par une goulotte de distribution (40) acheminant des conducteurs électriques lesquels sont destinés à être insérés dans le boîtier de dérivation (10) à travers un ou plusieurs orifices d'entrées (15a,15b) aménagés dans une face latérale (11a, 11b) du boîtier de dérivation (10), **caractérisé en ce que** le dispositif de protection comprend plusieurs clips de fixation élastiques (30,31,32,33) venant en saillie de la première paroi (21) et s'encliquetant indifféremment sur au moins un des orifices d'entrée (15a,15b) pour fixer le dispositif de protection (20) sur la face latérale (11a,11b) du boîtier de dérivation (10).

2. Dispositif de protection selon la revendication 1, **caractérisé en ce que** chaque clip de fixation (30) possède une rainure intérieure (30b) et une rainure extérieure (30a), la rainure intérieure (30b) pouvant s'encliqueter dans le bord d'un des deux orifices centraux (15b) d'une face latérale (11b) du boîtier possédant un nombre pair d'orifices et la rainure extérieure (30a) pouvant s'encliqueter dans le bord de l'orifice central (15a) d'une face latérale (11a) du boîtier possédant un nombre impair d'orifices.

3. Dispositif de protection selon la revendication 2, **caractérisé en ce que** le système de fixation comprend quatre clips de fixation (30,31,32,33) disposés symétriquement par rapport au centre de la face latérale (11a,11b) du boîtier (10), lorsque le dispositif de protection (20) est fixé au boîtier.

4. Dispositif de protection selon la revendication 1, **caractérisé en ce que** la seconde paroi (22) du dispositif est munie d'un quadrillage (29) permettant une découpe selon une forme complémentaire à la section transversale de la goulotte de distribution (40).

5. Dispositif de protection selon la revendication 4, **caractérisé en ce que** le quadrillage (29) de la seconde paroi (22) est réalisé en moindre épaisseur et comporte une pluralité de formes rectangulaires avec des pas prédéterminés.

6. Dispositif de protection selon la revendication 1, **caractérisé en ce que** la première paroi (21) comprend trois ouvertures (25) pour le passage des conducteurs électriques de la goulotte (40).

7. Dispositif de protection selon l'une des revendications précédentes, **caractérisé en ce qu'**il est fixé contre le boîtier de dérivation (10) une fois que les conducteurs électriques de la goulotte (40) sont insérés à l'intérieur du boîtier (10).
